# EUROPEAN PATENT APPLICATION

(11) **EP 4 663 465 A1**
(43) Date of publication of application: **17.12.2025**
(21) Application number: 24181168.6
(22) Date of filing: 10.06.2024
(51) Int. Cl.: B60L 53/16, B60L 53/18, B60L 53/30, B60L 53/65, B60L 53/66, H04L 9/32

(54) **AUTHORIZING CHARGING OF AN ELECTRIC VEHICLE**

(71) Applicant: VOLVO TRUCK CORPORATION, 405 08 Göteborg (SE)
(72) Inventor: KHAKSARI, Reza, 417 29 Göteborg (SE)
(74) Representative: Ström & Gulliksson AB

(57) **Abstract**

A smart charging cable, see (20), for authenticating charging of an electric vehicle, EV (10), via electric vehicle supply equipment, EVSE (30), the SCC (20) comprising processing circuitry (22), wherein, responsive to a successful communication setup being carried out between the EV (10) and the EVSE (30), the processing circuitry (22) is configured to cause authorization of the EV (10) to be charged with power supplied by the EVSE (30) via the SCC (20), the authorization involving a validation of a digital certificate maintained by the processing circuitry (22) using a trusted third actor, TTA (40).

## Description

### TECHNICAL FIELD

The disclosure generally relates to charging of an electric vehicle. In particular aspects, the disclosure relates to authorizing charging of an electric vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The landscape of electric vehicle (EV) charging systems is evolving, and security during the charging process is becoming increasingly important. As the number of EVs grows, the need for a secure and seamless interaction between EVs and electric vehicle supply equipment (EVSE) to initiate and manage the charging session is paramount. Current practices in EV charging focus on enhancing the security within the EV and the EVSE, but there remains a pressing need for innovation in the overall charging infrastructure to further streamline and safeguard the charging process.

It is in view these realizations and others that the present inventors are herein suggesting one or more improvements to the prior art of force feedback control for marine vessel input devices.

### SUMMARY

A key component of the charging infrastructure is the interface that connects the EV to the electric vehicle supply equipment (EVSE), traditionally known as the charging cable. Charging cables serve the fundamental purpose of delivering electrical power from the EVSE to the EV. However, with the advancement of technology and the need for secure energy transfer, these cables not only carries electricity. In fact, the process of charging an EV involves not only the physical transfer of power but also the need for secure communication between the EV and the EVSE to ensure proper charging protocols are followed.

Traditionally, the focus for enabling authorized communication has been on the side of the EV, on the side of the EVSE, or on both sides, leaving the charging cable as a passive conduit for electricity. Although some modern smart cables implement a token for identification and for initiating charging, they serve as simple means for communication lacking sufficient tools to establish authorized communication. This scenario presents a challenge in the authentication of charging sessions, as security measures are often confined to the EV and EVSE, overlooking the role that the charging interface itself could play. There is a clear opportunity for advancements that could enhance the functionality of the charging apparatus to meet the growing demands for security and intelligent management in EV charging systems.

The present inventor has therefore realized one or more improvements to the prior art of authorizing charging of an EV.

In a first aspect of the disclosure there is accordingly provided a smart charging cable, SCC, for authenticating charging of an electric vehicle, EV, via electric vehicle supply equipment, EVSE, the SCC comprising processing circuitry, wherein, responsive to a successful communication setup being carried out between the EV and the EVSE, the processing circuitry is configured to cause authorization of the EV to be charged with power supplied by the EVSE via the SCC, the authorization involving a validation of a digital certificate maintained by the processing circuitry using a trusted third actor, TTA. The first aspect of the disclosure may seek to enhance the security and reliability of electric vehicle charging by ensuring proper authorization through the validation of digital certificates. A technical benefit may include heightened security measures to prevent unauthorized charging, improved interoperability between different models of EVs and EVSEs, and the facilitation of a more user-friendly and secure charging process.

Optionally in some examples, including in at least one preferred example, the processing circuitry is configured to cause authorization by transmitting an authorization setup request to the EVSE; receiving an authorization setup response from the EVSE; in response to a successful authorization setup indicated by the authorization setup response, transmitting an authorization request to the EVSE, the authorization request being configured to be routed by the EVSE to the TTA for performing a sequence authorization process; and obtaining an authorization response from the EVSE in response to said sequence authorization process resulting in said validation of the digital certificate, wherein a successful authorization response allows the scheduling of a charging session for the EV and the EVSE using the SCC. A technical advantage may include enhanced security and streamlined communication during the charging process.

Optionally in some examples, including in at least one preferred example, the sequence authorization process involves a verification that the digital certificate maintained by the SCC permits a charging session between the EV and the EVSE, and is not revoked or has expired, wherein the sequence authorization process involves, by the EVSE, a transmission of the digital certificate to the TTA and a reception of a credential validation response from the TTA. A technical advantage may include ensuring the validity and current status of the digital certificate, enhancing trust in the charging process.

Optionally in some examples, including in at least one preferred example, the verification that the digital certificate permits a charging session comprises a validation of the digital certificate by a public-key infrastructure, and an inspection of permissions of the digital certificate based on information obtained from an access control list. A technical advantage may include robust validation processes that enhance the security and appropriateness of the charging session.

Optionally in some examples, including in at least one preferred example, the verification that the digital certificate is not revoked or has expired comprises querying or downloading a certificate revocation list involving revocation information of digital certificates, and checking a payload of the digital certificate for an expiry period thereof. A technical advantage may include maintaining high integrity and up-to-date status of digital certificates.

Optionally in some examples, including in at least one preferred example, the digital certificate is unique to the SCC. A technical advantage may include personalized security credentials that reduce the risk of unauthorized access.

Optionally in some examples, including in at least one preferred example, subsequent to the validation of a digital certificate, a second authentication procedure adapted to verify the identity of a user operating the SCC is carried out, comprising transmitting an authentication request to an external device operable by the user, the processing circuitry being configured to maintain a list of trusted external devices; and receiving, in response to a successful identity confirmation of the user at the external device, an authentication response from the external device. A technical advantage may include an additional layer of security by verifying user identity.

Optionally in some examples, including in at least one preferred example, the SCC is detachable from the EV and the EVSE and portable. A technical advantage may include flexibility and convenience in managing and using the charging cable.

Optionally in some examples, including in at least one preferred example, the processing circuitry is configured to carry out the communication setup by establishing an IP-based connection between the EV and the EVSE, establishing a TLS session between the EV and the EVSE, and establishing supported application protocols between the EV and the EVSE. A technical advantage may include robust and secure communication setup for reliable charging operations.

Optionally in some examples, including in at least one preferred example, the digital certificate comprises a public provisioning key pair having a private and a public key, the private key being maintained by the processing circuitry of the SCC and the public key being distributed to the EVSE adapted to charge the EV. A technical advantage may include enhanced security through key management and distribution.

Optionally in some examples, including in at least one preferred example, the processing circuitry comprises a secure module for generation of the digital certificate. A technical advantage may include secure and reliable generation of digital certificates within the device.

Optionally in some examples, including in at least one preferred example, the digital certificate is generated by a cloud service and wirelessly communicated to the processing circuitry. A technical advantage may include efficient and flexible management of digital certificates, allowing for easy updates and scalability.

In a second aspect of the disclosure there is provided a computer-implemented method for authenticating charging of an electric vehicle, EV, via electric vehicle supply equipment, EVSE, comprising, responsive to a successful communication setup being carried out between the EV and the EVSE: causing, by processing circuitry of a smart charging cable, SCC, authorization of the EV to be charged with power supplied by the EVSE via the SCC, the authorization involving a validation of a digital certificate maintained by the processing circuitry using a trusted third actor, TTA. The second aspect of the disclosure may seek to streamline the process of securely authorizing electric vehicle charging. A technical benefit may include enhanced security protocols through digital certificate validation, reducing potential risks of unauthorized access or fraudulent charging activities, and ensuring a trustworthy and efficient charging process.

In a third aspect of the disclosure there is provided a computer program product comprising program code for performing, when executed by the processing circuitry, the method of the second aspect. The third aspect of the disclosure may seek to provide a software solution that facilitates the secure authorization of electric vehicle charging through the execution of a specified method within a smart charging cable system. A technical benefit may include the ability to deploy updates or enhancements to the authorization process easily through software updates, improving adaptability and ensuring compatibility with evolving security standards and charging technologies.

In a fourth aspect of the disclosure there is provided a non-transitory computer-readable storage medium comprising instructions, which when executed by the processing circuitry, cause the processing circuitry to perform the method of the second aspect. The fourth aspect of the disclosure may seek to utilize a storage medium to reliably store software that controls and manages the authentication processes necessary for electric vehicle charging. A technical benefit may include the assurance of software persistence over time, providing a stable and reliable platform for executing essential security and authorization procedures necessary for safe and efficient EV charging.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system diagram of an electric vehicle according to an example.
**FIG. 2** is an exemplary system diagram of components taking part in an authorization process according to an example.
**FIG. 3** is an exemplary flowchart of a method for authenticating charging of an electric vehicle according to an example.
**FIG. 4** is an exemplary flowchart of a method for authenticating charging of an electric vehicle according to an example.
**FIG. 5** is a schematic diagram of an exemplary computer system for implementing examples disclosed herein.

### DETAILED DESCRIPTION

The detailed description set forth below provides information and examples of the disclosed technology with sufficient detail to enable those skilled in the art to practice the disclosure.

The present disclosure presents an approach for charging of EVs by incorporating a SCC with processing circuitry to actively manage authorization of the EV, which includes the validation of a digital certificate maintained by processing circuitry housed within the SCC using a trusted third actor. By transitioning this functionality to the SCC, it becomes an active participant in the authentication process, transforming from its passive role in prior art. This shift is particularly advantageous as it may improve the interface between the EV and the EVSE, which is better suited within the cable for multiple reasons. Firstly, the SCC's role as a smart intermediary offers a standardized solution for vehicle fleets, eliminating the need for each vehicle or charging station to have additional hardware for secure charging. Vehicle or charging equipment manufacturers benefit from not having to integrate complex authentication hardware, while vehicle owners enjoy the flexibility to change vehicles without worrying about revoking or transferring digital certificates. For example, when selling or scrapping a vehicle, there is no need to uninstall charging services or revoke installed charging certificates, ensuring that a charging account of a vehicle owner remains secure and private. Secondly, the SCC promotes flexibility and interoperability, allowing EVs to charge at different stations without compatibility issues, and simplifying infrastructure at charging stations by standardizing authentication protocols. Scalability is also improved, as the reliance on the EV's onboard authentication system is reduced; a single SCC can serve multiple vehicles, providing a practical solution for households with more than one EV.

Further enhancing this security model may be the adoption of a zero trust approach, which, by incorporating micro-segmentation into the communication network between the EV and EVSE, may bolster the charging security posture. The zero trust approach may divide the network into smaller, more secure segments, operating on the principle of least privilege, thus granting access only to the necessary resources and only at the required times, thereby reducing the potential attack surface.

In essence, the disclosure redefines the charging process by endowing the charging cable with intelligence and an active role in the authentication process, leading to a more secure, flexible, and user-friendly EV charging ecosystem that is well-suited to the evolving needs of individual and fleet EV owners alike. It provides a streamlined approach that maintains security while adding convenience and reducing the complexity of the existing systems in vehicles and charging stations. This approach has not been considered and is not necessary for charging cables in other technical areas, such as charging of smartphones, because in these areas the original equipment manufacturers follow one standard and has no compatibility issues. This cannot be said for EVs or EVSE, hence the need for the concepts detailed by the present disclosure.

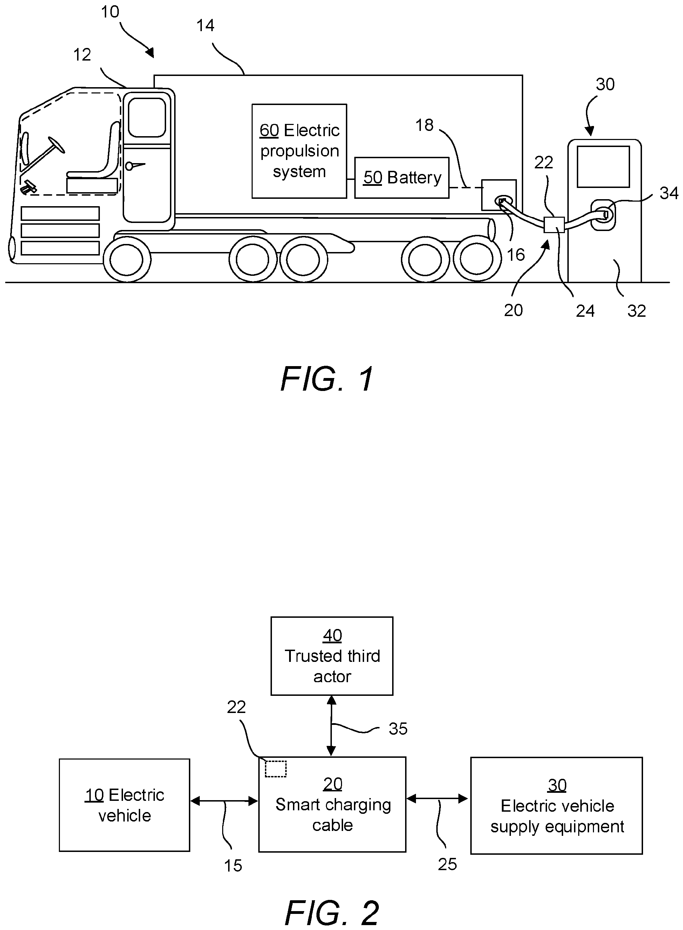

**FIG. 1** is an exemplary schematic illustration of an EV **10**. The EV **10** is illustrated as a heavy-duty vehicle, in this case a truck. The EV **10** may in other examples be electric buses, electric marine vessels, electric construction equipment, electric personal vehicles, among other vehicle types. Generally, the subject matter herein may be applied for EVs **10** using electric motors as their primary source of propulsion.

The EV **10** comprises a tractor unit **12** which is arranged to tow a trailer unit **14.** The EV **10** comprises vehicle units and associated functionality as would be understood and expected by a skilled person, such as a powertrain, chassis, and various control systems.

The EV **10** comprises an electric propulsion system **60.** The electric propulsion system **60** may be a battery electric propulsion system, a hybrid propulsion system, or other electric propulsion systems known in the art. The electric propulsion system **60** comprises one or more electric motors connected to the wheels or drivetrain of the EV **10.** When the EV **10** accelerates, the electric motors draw power from a battery **50** and converts it into mechanical energy to propel the EV **10** forward. During deceleration or braking, regenerative braking systems can reverse the process, i.e., converting kinetic energy back into electrical energy and directing it back into the battery **50** for storage.

The battery **50** may be a lithium-ion battery, lithium iron phosphate battery, solid-state battery, graphene battery, sodium-ion battery, nickel-cobalt-manganese battery, aluminum-ion battery, or other battery types known in the art. The battery **50** is used to store electrical energy. The battery **50** is rechargeable and adapted to provide a source of electricity for the electric propulsion system **60.** During charging, electricity from an external power source, is used to replenish the energy stored in the battery **50.** In the present disclosure this external power source is an EVSE **30**, depicted in **FIG. 1** as a charging station. The stored electrical energy is then made available for the electric propulsion system **60** when the vehicle is in motion.

The battery **50** includes individual battery cells capable of storing the electrical energy. While the present disclosure refers to a singular battery **50** for reasons of brevity, the EV **10** typically includes a plurality of batteries **50.** Subsets of the plurality of batteries are assembled into larger battery pack structures encapsulating a multitude of individual cells and batteries **50.** The EV **10** may include a plurality of battery packs.

A battery management system (BMS, not shown) may be provided for monitoring, protecting and improving the performance of the battery **50**, which may ensure safe and efficient operation and prolonging the lifetime expectancy of the battery **50.**

The EVSE **30** refers to the infrastructure, commonly known as a charging station or charging point, that supplies electric energy for recharging the EV **10.** The EVSE **30** may be a charging device adapted to provide electrical power to the EV **10.** The EVSE **30** may be a public or private station. The EVSE **30** is the connection point between the electric grid and the EV **10**, providing the necessary interface for charging. The EVSE **30** includes the charging station **32** and a connector or plug **34** for receiving a charging cable, more specifically an SCC **20** which will further be detailed shortly.

The EVSE **30** may be categorized as any type readily adaptable to charge EVs **10**, including type 2 EVSE ("standard" charging station typically operating at 240 V) and type 3 EVSE (DC fast charging). The EVSE **30** may be adapted for both AC and DC charging.

The EVSE **30** is capable of communicating both power and data. The power is communicated via a power line of the SCC **20** and the data via a data line of the SCC **20.** The data line may be a wired connection within the SCC **20.** The data line may alternatively or additionally be effected over a wireless communication channel. The wireless communication channel typically employs short-range communication standards, as the EV **10** would typically be close to the EVSE **30** during charging. However, long-range communication standards may alternatively be employed. Short-range communication standards include, for instance, IEEE 802.11, IEEE 802.15, ZigBee, WirelessHART, WiFi, Bluetooth^{®}, BLE, RFID, WLAN, MQTT IoT, CoAP, DDS, NFC, AMQP, LoRaWAN, Z-Wave, Sigfox, Thread, EnOcean, mesh communication, or any other form of proximity-based device-to-device radio communication signal such as LTE Direct. Long-range communication interfaces include, for instance, W-CDMA/HSPA, GSM, UTRAN or LTE.

In communication with the EVSE **30**, the EV **10** utilizes an on-vehicle communication interface **18**. The on-vehicle communication interface **18** may include an interface for power and an interface for data. The power communication interface is configured to manage power connections between the battery **50** and the EVSE **30** via the SCC **20**. The data communication interface can be employed for managing data connections between vehicle processing circuitry and the EVSE **30** via the SCC **20**, or optionally via wireless communication.

**FIG. 1** further depicts the SCC **20.** The SCC **20** is used for authenticating charging of the EV **10** via the EVSE **30.** This refers to the process where the SCC **20**, more specifically processing circuitry **22** thereof, validates a digital certificate as part of an authorization protocol. This process ensures that the EV **10** is permitted to receive power from the EVSE **30.** The validation is executed by checking the digital certificate against criteria set by a trusted third actor (TTA), confirming the identity and authorization status of the EV **10** and the SCC **20** before power is transferred. This is a security measure to prevent unauthorized charging sessions and to ensure that the charging process complies with set standards and protocols.

The authorization of the EV **10** is caused in response to a successful communication setup being carried out between the EV **10** and the EVSE **30.** This means that before the EV **10** is allowed to start charging, there is a verified and secure exchange of information between the EV **10** and the EVSE **30.** This setup involves confirming the identities of both the EV **10** and the EVSE **30** to each other and establishing a secure communication channel. This step ensures that both the EV **10** and the EVSE **30** are legitimate to engage in the authorization process. Essentially, this setup acts as a preliminary security measure to validate the respective integrities of the parties in the connection before authorization and then power transfer commences.

The processing circuitry **22** is distinct and physically separated from processing circuitry found in both the EV **10** and the EVSE **30.** This separation emphasizes the autonomous function of the SCC **20**, which has its own dedicated processing capabilities to handle tasks including the authorization independently of the EV and EVSE systems, and only by expecting acknowledgments therefrom. The logic surrounding the authorization is therefore conducted by the SCC **20** itself.

The SCC **20** may include a housing **24** for the processing circuitry **22.** The housing **24** can shield the processing circuitry from physical damage and environmental factors such as moisture, dust, and temperature fluctuations, which are common in the operational environments of EV charging. Moreover, the housing **24** can help secure sensitive components against tampering and unauthorized access, ensuring that the integrity of the data and the authentication process is maintained. The housing **24** may also allow for easier integration of the SCC **20** into the charging cable system and simplify maintenance and upgrades of the processing circuitry **22** as it can be contained and accessed separately. The housing **24** can also include features for heat dissipation to prevent overheating of the processing circuitry **22** during operation.

The housing **24** may be located at various positions along the SCC **20.** In one example the housing **24** is located closer to the EV **10** than the EVSE **30.** Positioning the housing **24** near the EV **10** may provide the advantage of facilitating better integration with the internal systems of the EV **10**, allowing for more efficient data communication and power management. In another example the housing **24** is located closer to the EVSE **30.** This positioning may be advantageous for accessing external power sources and network connections, ensuring more stable and reliable operation of the processing circuitry **22.** Being closer to the EVSE **30** may also simplify the connection and disconnection process, as the housing **24** would be situated near the primary power source.

The housing **24** can be protected inside outer peripheries of the SCC **20**, offering the advantage of additional physical protection from external impacts and environmental exposure. This internal positioning may also help in reducing the bulkiness of the cable, making it more user-friendly and easier to handle.

Other technical details include the possibility of the housing **24** being made from robust materials such as aluminum or high-grade plastic to provide durability and protection. The housing **24** may also feature modular design elements, allowing for easy replacement or upgrading of components. Inside the housing **24**, the processing circuitry **22** may be mounted on shock-absorbing materials to mitigate damage from physical impacts.

Furthermore, the housing **24** can be designed with various access points or ports for diagnostics and firmware updates, facilitating easy maintenance and ensuring the SCC **20** can stay up-to-date with the latest security protocols and features. The housing may also incorporate indicators such as LEDs to display the operational status of the SCC **20**, providing users with immediate feedback on e.g. charging status and/or potential error message(s).

The SCC **20** may be detachable from the EV **10** and the EVSE **30** and portable. This implies that the SCC **20** can be physically disconnected from both the EV **10** and the EVSE **30**, which can be facilitated by connectors or plugs **16**, **34** that are compatible with standard charging ports on both the EV **10** and EVSE **30.** The ability to detach the SCC **20** can offer flexibility and ease of use, as it can be removed for maintenance, storage, or use with different EVs **10** or EVSEs **30** without requiring permanent installation. The detachability means that the SCC **20** is not a fixed part of either the EV's **10** or the EVSE's **30** built-in infrastructure, thus operating as an independent unit that can interface with multiple systems, enhancing its versatility. The portability aspect implies that the SCC **20** is lightweight and compact enough to be easily carried by hand. This makes it convenient for users to transport the SCC **20** between different locations or vehicles, potentially serving multiple EVs **10** or EVSEs **30.** This makes the SCC **20** a scalable solution that can serve multiple EVs (e.g. a single household having several EVs may employ a single SCC **20**), thus fostering a more user-friendly and secure charging experience. For users, particularly those with access to multiple vehicles or who use public or semi-public charging stations, the portable SCC **20** may thus ensure that they can always engage in secure charging activities, backed by a trusted device that manages the authorization irrespective of the external system's configurations. The portable nature of the SCC **20** also means it can be stored securely when not in use, reducing the risk of theft or damage that might be more likely with permanently attached equipment.

Being both detachable and portable allows the SCC **20** to act as a mobile authorization agent. It can carry security credentials and authorization logic from one charging session to another, regardless of the specific EV **10** or EVSE **30** being used. This mobility ensures that secure, authenticated charging can occur in diverse locations and setups. Since the processing circuitry **22** maintains the digital certificates used for the authorization, and communicates with the TTA, this can simplify the interaction between the EV **10** and EVSE **30.** By handling the credentials, the SCC **20** can thus provide an additional layer of security by acting as a gatekeeper that verifies the legitimacy of both the EVSE **30** and the EV **10** before allowing energy transfer.

Standard protocols often define communication and authorization between the EV **10** and the EVSE **30** directly, typically built into their respective systems. The SCC **20**, by contrast, centralizes the authentication process within a separate, mobile unit. This is distinct because it does not rely on the EV **10** or EVSE **30** to independently handle or initiate secure communications, which can be beneficial in environments where the built-in security of the EV **10** or EVSE **30** might not be trusted or is unknown.

The communication channels of the SCC **20** is generally depicted according to the example of **FIG. 2**, where the EV **10,** SCC **20,** and the EVSE **30** may be those defined above. A TTA **40** is also shown in the illustration. The TTA **40** is an independent entity that plays an important role in the authorization, for example a certificate authority (CA). The TTA **40** may be a trusted third-party organization or system that operates independently of the entities involved in the primary transaction or interaction. It is considered neutral and reliable, and it possesses the authority or capability to perform security-related services such as identity verification, certificate issuance, and certificate validation. The primary purpose of the TTA **40** is to enhance security and trust in digital transactions and communications by providing a verifiable assurance of the identities of the parties involved. In contexts where security and authenticity are critical, such as the present one, the TTA **40** ensures that all entities participating in a transaction are indeed who they claim to be, based on validated credentials, in this case the digital certificate. In the context of a smart charging cable system for electric vehicles, where the SCC **20** manages the authentication of the EV **10** and EVSE **30**, the TTA **40** plays a role in ensuring the integrity and security of the charging process. It validates the digital certificates involved, ensuring they are current and have not been tampered with or revoked. By involving the TTA **40**, mitigation of the risk of fraudulent activities, unauthorized access, and other security threats, can be provided. The TTA **40** may also help build trust among users and stakeholders by ensuring that the charging process adheres to high security and safety standards. The TTA **40** can also confirm that regulatory requirements are met.

A first communication channel **15** is between the EV **10** and the SCC **20.** This channel **15** can facilitate the transfer of identification and security data from the EV **10** to the SCC **30.** The EV sends its credentials, which may include digital certificates, identifiers, and other authentication-related data to the SCC **20.** This channel **15** typically initiates the authentication process. The SCC **20** collects and preliminarily assesses the data to ensure it is from a legitimate source before proceeding with further validations.

A second communication channel **25** is between the SCC **20** and the EVSE **30.** Similar to the first communication channel **15**, this channel **25** allows the EVSE **30** to send its credentials and authentication data to the SCC **20.** This can ensure that both ends of the charging setup are independently verified. This channel **25** can verify the authenticity and security status of the EVSE **30.** It is important to ensure that the EVSE **30** is also legitimate and authorized to deliver power, safeguarding against potential tampering or unauthorized access.

A third communication channel **35** is between the SCC **20** and the TTA **40.** This is the channel **35** through which the SCC **20** communicates with the TTA **40** to validate the digital certificates received from both the EV **10** and the EVSE **30.** The SCC **20** sends the collected certificates to the TTA **40**, which checks them against its database to confirm their validity, checking for revocations, expiration, and ensuring they match the issuing authority's records. This channel **35** can establish integrity of the entire authorization process. It may ensure that all certificates involved are current and valid, providing a final layer of security before allowing the charging session to proceed.

The SCC **20** acts as the central component in this setup, orchestrating the entire authorization process. By centralizing the logic and processing within the SCC **20**, the system can ensure that all security checks are conducted through a single, controlled point, which enhances the security and reliability of the charging process. This centralization can also simplify the system architecture by reducing the need for complex, redundant security measures in both the EV **10** and the EVSE **30**, allowing these devices to rely on the SCC **20** for security management. The SCC's **20** role as the orchestrator means it is responsible for managing the flow of data across all three communication channels **15**, **25**, **35.** It receives data from the EV **10** and the EVSE **30**, processes this information, and interacts with the TTA **40** to validate credentials. This setup allows the SCC **20** to act proactively in managing and mitigating any security risks, providing a dynamic response capability where it can refuse charging if any part of the authentication chain fails. By controlling when and how the EV **10** is authorized to charge, the SCC **20** can ensure compliance with security protocols and standards, maintain high levels of data integrity, and provide a consistent user experience across different charging stations and environments.

The digital certificate referred to herein may include a public provisioning key pair that consists of a private key and a public key. The private key is securely maintained by the processing circuitry **22** within the SCC **20**, while the public key is distributed to the EVSE **30** that is adapted to charge the EV **10.** This setup can facilitate secure authentication and authorization processes between the SCC **20** and the EVSE **30**, ensuring that the charging session can only be initiated following successful verification of identities and permissions.

In some examples, the processing circuitry **22** of the SCC **20** includes a secure module specifically designed for the generation of digital certificates. This secure module is capable of creating the public and private keys that form the digital certificate. The secure module could be a hardware security module (HSM) embedded within the processing circuitry **22.** It can ensure that the cryptographic keys are generated in a secure environment, protecting the keys from external threats and unauthorized access. Generating the certificate directly on the SCC **20** can allow for immediate issuance and use without relying on external systems. This can be advantageous in environments where connectivity is limited or security policies require on-device key management. The setup above can be useful in scenarios where each SCC **20** needs a unique identity, or where high levels of security are required, as it reduces the risk of exposure of the private key. To this end, the digital certificate is in some examples unique to the SCC **20,** which means it is specifically generated for and assigned to that particular SCC unit. This uniqueness can be achieved by incorporating unique identifiers of the SCC **20** into the certificate during its generation. Such identifiers could include a serial number, a hardware ID, or a combination of both. Upon manufacturing or at initial setup, the SCC **20** is provisioned with this unique digital certificate. When the SCC **20** attempts to authenticate a charging session with an EV **10** or EVSE **30**, it presents its certificate as part of the authentication protocol.

In some examples, the digital certificate is generated by a cloud service. After generation, it is then securely transmitted and installed onto the processing circuitry **22** of the SCC **20** wirelessly. The cloud service responsible for certificate generation could be part of a larger digital security infrastructure managed by the fleet operator or a trusted third-party service provider, such as the TTA **40.** Secure communication protocols such as TLS (Transport Layer Security) can be used to ensure the safe transmission of the certificate and keys from the cloud to the SCC **20.** This method may allow for centralized management of certificates, which can be useful in fleet management scenarios. Fleet managers can issue, renew, or revoke certificates remotely, enhancing operational flexibility and efficiency.

In some examples, the processing circuitry **22** includes a mechanism to monitor the validity period of the digital certificate it stores. This can be achieved through an internal clock or a timer system that keeps track of the time remaining before the certificate's expiration. Upon detecting that the expiration of the certificate is imminent, the processing circuitry **22** automatically initiates the process of certificate regeneration. This could involve re-generating a new key pair (private and public keys) and requesting a new certificate from a certificate authority, or simply renewing the current certificate if possible.

In some examples, the processing circuitry **22** is configured to carry out periodic checks on the digital certificate to ensure its integrity. This could involve verifying the digital signature of the certificate using the public key of the issuer, such as the TTA **40**, to ensure that the certificate has not been tampered with. If a discrepancy or anomaly is detected during these checks (such as an invalid signature or corruption of certificate data), the processing circuitry **22** can initiate one or more predefined corrective measures. These measures could include alerting a system administrator, isolating the SCC **20** from the network to prevent potential security breaches, or automatically initiating the regeneration of the certificate.

In some examples, the processing circuitry **22** may include one or more communication interfaces to receive signals or commands from an external device, such as a mobile phone of a user. This setup can allow it to receive notifications or alerts regarding unauthorized use of the SCC **20.** Upon receiving a signal indicative of unauthorized use (which could be detected through unusual patterns of usage or explicit alerts from security systems), the processing circuitry **22** can be configured to revoke the digital certificate. This revocation can prevent any further charging sessions until the issue is resolved, effectively disabling the SCC's **20** functionality in unauthorized scenarios. This feature can add an additional layer of security, ensuring that any potential misuse or theft of the SCC **20** does not compromise the security of the charging infrastructure. It can allow for immediate response to security threats, which may improve the overall safety of the electric vehicle charging ecosystem.

In some examples, a layered security approach can be implemented by the processing circuitry **22** of the SCC **20**, incorporating a second authentication procedure following the initial validation of the digital certificate. This additional authentication step is specifically designed to verify the identity of the user operating the SCC **20**, adding an extra layer of security to prevent unauthorized use, such as theft of the cable.

After the initial digital certificate validation, which confirms that the SCC **20** is authorized to initiate a charging session, the processing circuitry **22** is configured to initiate a second authentication procedure. This procedure is designed to verify the identity of the user handling the SCC **20**, ensuring that the operator is authorized to use the device. This second layer of authentication acts as a safeguard against unauthorized physical access or misuse of the SCC, addressing security concerns particularly important in public or semi-public charging environments.

The second authentication procedure may involve interactive communication between the SCC **20** and an external device, which is typically a mobile device operated by the user. The processing circuitry **22** is configured to transmit an authentication request to the external device. This request could involve a prompt for a PIN, password, biometric verification (like fingerprint or facial recognition), or a dynamically generated authentication code. The processing circuitry **22** is configured to maintain a list of trusted external devices, which could be pre-registered devices known to be associated with authorized users. This list helps prevent fraudulent authentication attempts from unrecognized devices. The use of a trusted device list and interactive authentication can help ensure that the system is resilient against common security threats such as spoofing or relay attacks, where an attacker might try to mimic or relay authentication signals from another device.

Upon successful verification of the user's identity on the external device, an authentication response is sent back to the SCC **20.** This response confirms that the person attempting to use the SCC **20** is indeed authorized. This approach may effectively tie the use of the SCC **20** to a specific, verified user, enhancing security by ensuring that even if the SCC **20** is physically stolen, it cannot be used without successful user verification. The second authorization procedure may thus act as a form of two-factor authentication (2FA), where one factor is the possession of the SCC **20** and the second is the possession of a registered, trusted external device capable of confirming the user's identity.

The examples of the second authorization procedure may be useful due to the fact that the SCC **20**, being a small and portable device, is more susceptible to theft or unauthorized use compared to fixed components like the EV **10** or EVSE **30.**

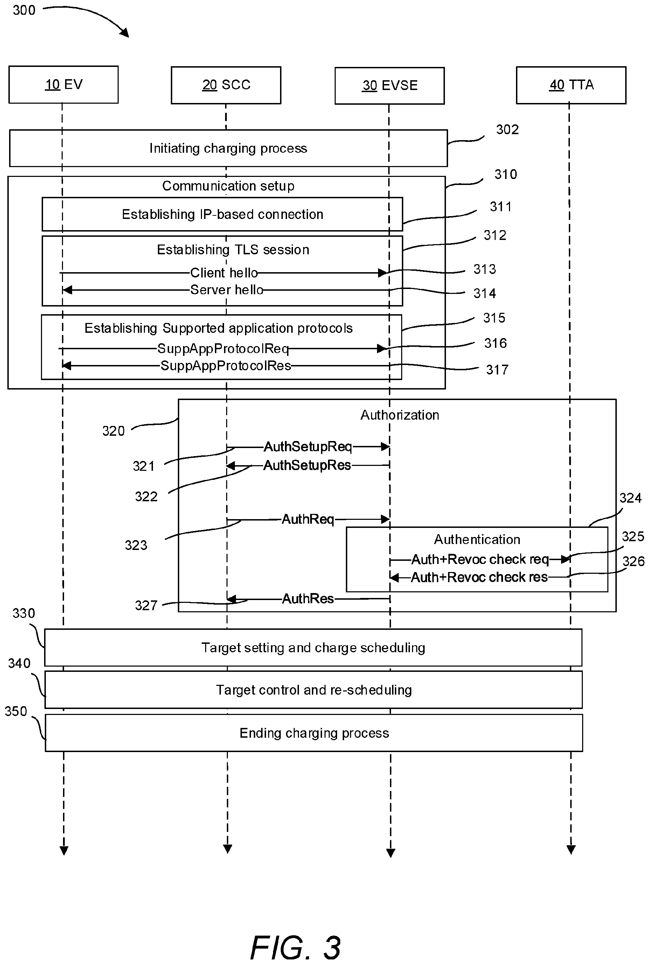

Reference will now be made to **FIG. 3**, illustrating an exemplary flowchart method **300** of authenticating charging of an EV **10** via EVSE **30.** This method may be orchestrated by a SCC **20** operating as a master unit between the EV **10**, EVSE **30**, and TTA **40.** It shall be noted that this is but one exemplary way of authenticating charging. The exemplary steps of this method **300** can be omitted, replaced, or adjusted, as required by the prevalent authorization method being employed by the SCC **20.**

At **302**, the charging process is initiated. The SCC **20** acts as the intermediary to the EV **10** and the EVSE **30**, facilitating the initial handshake and communication protocols that enable the charging process to commence. This step can involve the SCC **20** verifying the physical connections and ensuring that both the EV **10** and the EVSE **30** are ready and capable of starting the charging session.

At **310**, the communication setup referred to above is carried out, which is a comprehensive phase involving the establishment of a secure and efficient communication line between the EV **10** and the EVSE **30**, coordinated by the SCC **20.** The SCC **20** manages the flow of data, ensuring that all communications are correctly routed and processed.

At **311**, an IP-based connection is established between the EV **10** and the EVSE **30.** The SCC **20** facilitates this by managing the network configurations and serving as a gateway, possibly assigning IP addresses or acting as a DHCP server, ensuring that both devices can communicate over a common network protocol.

At **312**, a TLS session is established between the EV **10** and the EVSE **30** to secure the communication. The SCC **20** plays a role in this step by intermediating the encryption handshake, possibly storing and handling encryption keys, and ensuring that the session is established without interception or data compromise.

At **313**, during the TLS session establishment, a client hello message is sent. The SCC **20** ensures that this message, which initiates the negotiation of the TLS session and specifies the client's capabilities (like supported TLS versions and cipher suites), is accurately relayed from the EV **10** to the EVSE **30.**

At **314**, a server hello message follows from the EVSE **30.** The SCC **20** receives this message, which responds to the client hello with the chosen protocols and cipher suites, and passes it back to the EV **10.** The SCC **20** ensures the integrity and authenticity of this message during transit.

At **315**, supported application protocols between the EV **10** and the EVSE **30** are established. The SCC **20**, acting as the communication manager, ensures both sides agree on which application protocols (such as charging protocols or data exchange formats) will be used during the session.

At **316**, a supported application protocol request is sent. The SCC **20** mediates this request from the EV, which may include specific requirements or preferences for the application layer protocols to be used during the charging process.

At **317**, in response, a supported application protocol message is received from the EVSE **30.** The SCC **20** collects this response, ensuring that the agreed protocols are supported and setting up the necessary parameters for these protocols to function effectively during the charging session.

At **320**, the authorization process is initiated by the SCC **20** in response to a successful communication setup being carried out. This step involves a series of exchanges to ensure that the EV **10** is authorized to charge at the EVSE **30**, by way of validating the digital certificate maintained by the SCC **20**, and more specifically by the processing circuitry **22** thereof.

At **321**, an authorization setup request is sent from the SCC **20** to the EVSE **30.** This request by the SCC **20** could include credentials or identifiers of the EV **10**, which are necessary for initiating the authorization process. The SCC **20** may ensure that this request is formatted correctly and securely transmitted to the EVSE **10.**

At **322**, an authorization setup response is sent back to the SCC **20** from the EVSE **30.** This response acknowledges the receipt of the authorization setup request and may also provide necessary security tokens or data required to proceed with further authorization steps. The SCC **20** acts as a receiver and processor of this information, ensuring its integrity and storing it securely.

At **323**, in response to a successful authorization setup indicated by the authorization setup response, the SCC **20** sends an authorization request to the EVSE **30.** This request moves the process forward by formally asking for permission to start charging based on the credentials and preliminary setup data exchanged in the earlier steps (**321** and **322**).

At **324**, the authorization request is configured to be routed by the EVSE **30** to the TTA **40**, along with a revocation check, for performing a sequence authorization process. The authorization and revocation check involves is done for validating the credentials presented, and includes sub-steps **325** and **326.** The sequence authorization process may be centered around the digital certificate maintained by the SCC **20**, i.e., important for authenticating the charging session. Step **324** may therefore aim to ensure that the certificate meets two criteria: (i) it authorizes a charging session between the EV and the EVSE, and (ii) it is currently valid and has not been revoked.

At **325**, the authorization and revocation check request routed to the TTA **40.** The SCC **20** ensures that the EVSE **30** has the necessary data from the EV **10** to carry out this check, and it may also assist in securing and routing this request to the TTA **40.** During this sub-step **325**, the EVSE **30** routes the digital certificate received from the SCC **20** to the TTA **40.** The transmission involves securely sending the certificate details, which include the public key of the SCC **20**, and possibly other identifying information encapsulated within the certificate, to the TTA **40.** The purpose of this transmission is for the TTA **40** to perform a thorough check against its databases or through its validation protocols.

The sequence authorization process may involve a certificate validation, including that the TTA **40** checks signatures of the digital certificate by a public-key infrastructure to ensure they match with what is registered or expected from a valid issuing authority. This confirms the certificate's authenticity. The sequence authorization process may, additionally or alternatively, involve a revocation check including that the TTA **40** looks up the certificate in a list of revoked certificates, such as a certificate revocation list (CRL) or through an online certificate status protocol (OCSP), to ensure it has not been flagged as revoked. This is used for purposes of establishing whether a revoked certificate indicates issues like security breaches or unauthorized issuances. The sequence authorization process may, additionally or alternatively, involve an expiration check that the TTA **40** verifies that the certificate is within its valid operational dates, for example by checking a payload of the digital certificate for an expiry period thereof. An expired certificate typically cannot be trusted as it implies outdated or possibly compromised security parameters.

The verification that the digital certificate permits a charging session may comprise one or more of a validation of the digital certificate using a public-key infrastructure (PKI), and an inspection of permissions of the digital certificate based on information obtained from an access control list (ACL).

For the PKI validation, a framework for the creation, the authenticity of the digital certificate is verified by confirming that it was issued by a legitimate certificate authority (CA), such as the TTA **40**, recognized within the PKI system. This involves checking the digital signature of the CA on the certificate using the CA's public key. This may be done through cryptographic hashing techniques, such as SHA-256, SHA-3, SHA-512, RIPEMD-160, etc.

For the inspection of permissions based on ACL information, the ACL would specify which certificates (or which entities holding certain certificates) are allowed to initiate charging sessions. The certificate's details, such as the certificate holder's identity, public key, or other unique identifiers, are matched against entries in the ACL. The ACL entry corresponding to the certificate is inspected to verify that it includes permissions for conducting charging sessions. This might involve checking specific flags, roles, or attributes assigned to the certificate within the ACL. Depending on the setup, permissions might also include context-specific constraints like allowable charging times, power limits, or specific EVSE locations.

If either one or both of the PKI validation and the ACL permissions inspection confirm that the digital certificate is valid, authentic, not revoked, and possesses the necessary permissions, then the SCC **20** is authorized to proceed with facilitating the charging session. This verification may ensure a robust security posture, reduce the risk of unauthorized access or fraudulent activity, and maintain the integrity and reliability of the EV charging infrastructure.

At **326**, the TTA **40** responds with an authorization and revocation check response. This response indicates whether the credentials are valid and not revoked. The SCC **20** receives this information from the EVSE **30** and processes it to determine the next steps in the charging authorization. If the response from the TTA **40** confirms the validity of the certificate (i.e., it is authentic, not revoked, and not expired), the EVSE **30** then proceeds to authorize the charging session. Conversely, if any issues are detected with the certificate (e.g., it is revoked, expired, or does not authenticate), the EVSE **30** will reject the charging request, thereby preventing any unauthorized or unsafe charging activity.

At **327**, following successful validation in steps **324**, **325**, and **326**, the EVSE **10** responds to the SCC's **20** authorization request sent at **323.** This final response from the EVSE **30** to the SCC **20** confirms whether the EV **10** is authorized to start charging, based on the successful authentication and checks performed by the TTA **40.** To this end, the authorization response at **327** is a result of the validation of the digital certificate, wherein a successful authorization response allows the scheduling of a charging session for the EV **10** and the EVSE **30** using the SCC **20**, which is further detailed at step **330.**

At **330**, assuming successful authorization, the SCC **20** now facilitates the initiation of the actual charging session. It communicates with both the EV **10** and the EVSE **30** to ensure that power transfer begins under the agreed-upon conditions and parameters.

At **340**, the SCC **20** is being configured to monitor the charging session. This step can involve continual checks and balances to ensure that the charging process operates smoothly and adheres to the safety and protocol standards throughout the session.

At **350**, the charging session is terminated. The SCC **20** can handle the termination of the charging process, ensuring that all connections are securely closed, and data regarding the session is logged, for example for future reference or billing purposes.

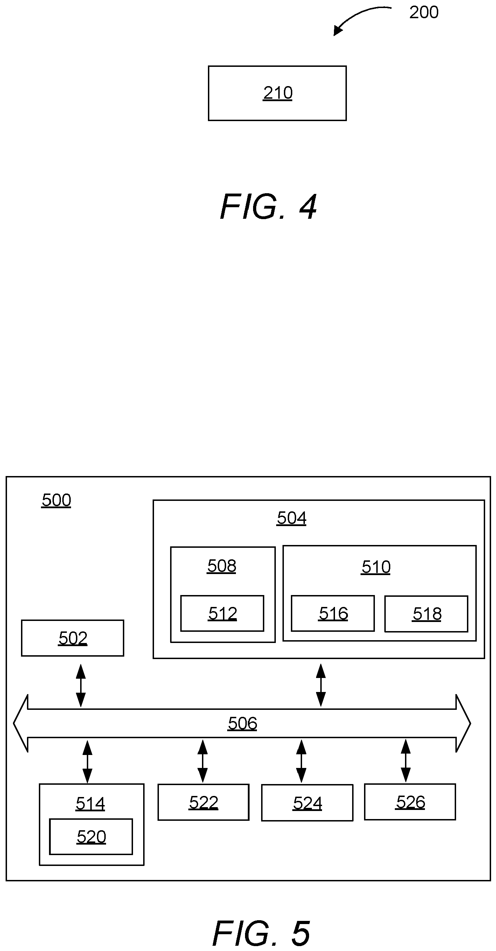

**FIG. 4** is a flowchart of a computer-implemented method **200** for authenticating charging of an EV **10** via EVSE **30.** The method **200** comprises, responsive to a successful communication setup being carried out between the EV **10** and the EVSE **30**, causing **210**, by processing circuitry **22** of an SCC **20**, authorization of the EV **10** to be charged with power supplied by the EVSE **30** via the SCC **20**, the authorization involving a validation of a digital certificate maintained by the processing circuitry **22** using a TTA **40.**

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504**, and a system bus **506.** The processing circuitry **502** may correspond to the processing circuitry **22** discussed herein. Hence, the SCC **20** may involve one or more of the components of the computer system **500** of **FIG. 5****.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510**, which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514**, which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A smart charging cable, SCC (20), for authenticating charging of an electric vehicle, EV (10), via electric vehicle supply equipment, EVSE (30), the SCC (20) comprising processing circuitry (22), wherein, responsive to a successful communication setup being carried out between the EV (10) and the EVSE (30), the processing circuitry (22) is configured to cause authorization of the EV (10) to be charged with power supplied by the EVSE (30) via the SCC (20), the authorization involving a validation of a digital certificate maintained by the processing circuitry (22) using a trusted third actor, TTA (40).

Example 2: The SCC (20) of Example 1, wherein the processing circuitry (22) is configured to cause authorization by: transmitting an authorization setup request to the EVSE (30); receiving an authorization setup response from the EVSE (30); in response to a successful authorization setup indicated by the authorization setup response, transmitting an authorization request to the EVSE (30), the authorization request being configured to be routed by the EVSE (30) to the TTA (40) for performing a sequence authorization process; and obtaining an authorization response from the EVSE (30) in response to said sequence authorization process resulting in said validation of the digital certificate, wherein a successful authorization response allows the scheduling of a charging session for the EV (10) and the EVSE (30) using the SCC (20).

Example 3: The SCC (20) of Example 2, wherein the sequence authorization process involves a verification that the digital certificate maintained by the SCC (20): (i) permits a charging session between the EV (10) and the EVSE (30), and (ii) is not revoked or has expired, wherein the sequence authorization process involves, by the EVSE (30), a transmission of the digital certificate to the TTA (40) and a reception of a credential validation response from the TTA (40).

Example 4: The SCC (20) of Example 3, wherein the verification that the digital certificate permits a charging session comprises one or more of: a validation of the digital certificate by a public-key infrastructure, and an inspection of permissions of the digital certificate based on information obtained from an access control list.

Example 5: The SCC (20) of Examples 3-4, wherein the verification that the digital certificate is not revoked or has expired comprises one or more of: querying or downloading a certificate revocation list involving revocation information of digital certificates, and checking a payload of the digital certificate for an expiry period thereof.

Example 6: The SCC (20) of any preceding example, wherein the digital certificate is unique to the SCC (20).

Example 7: The SCC (20) of any preceding example, wherein the processing circuitry (22) is further configured to, subsequent to the validation of a digital certificate, carry out a second authentication procedure adapted to verify the identity of a user operating the SCC (20).

Example 8: The SCC (20) of Example 7, wherein the processing circuitry (22) is configured to carry out the second authentication procedure by: transmitting an authentication request to an external device operable by the user, the processing circuitry (22) being configured to maintain a list of trusted external devices; and receiving, in response to a successful identity confirmation of the user at the external device, an authentication response from the external device.

Example 9: The SCC (20) of any preceding example, wherein the processing circuitry (22) is configured to automatically cause regeneration of the digital certificate in response to a detection of an impending expiration thereof.

Example 10: The SCC (20) of any preceding example, wherein the processing circuitry (22) is configured to carry out a periodic self-check to validate the integrity of the digital certificate and initiate one or more corrective measures in response to a detected discrepancy during the self-check.

Example 11: The SCC (20) of any preceding example, wherein the processing circuitry (22) is configured to revoke the digital certificate in response to receiving a request from an external device being indicative of an unauthorized usage of the SCC (20).

Example 12: The SCC (20) of any preceding example, further comprising a housing (24) adapted to house the processing circuitry (22).

Example 13: The SCC (20) of any preceding example, wherein the SCC (20) is detachable from the EV (10) and the EVSE (30) and portable.

Example 14: The SCC (20) of any preceding example, wherein the processing circuitry (22) is configured to carry out the communication setup by: establishing an IP-based connection between the EV (10) and the EVSE (30), establishing a TLS session between the EV (10) and the EVSE (30), and establishing supported application protocols between the EV (10) and the EVSE (30).

Example 15: The SCC (20) of any preceding example, wherein the digital certificate comprises a public provisioning key pair having a private and a public key, the private key being maintained by the processing circuitry (22) of the SCC (20) and the public key being distributed to the EVSE (30) adapted to charge the EV (10).

Example 16: The SCC (20) of any preceding example, wherein the processing circuitry (22) comprises a secure module for generation of the digital certificate.

Example 17: The SCC (20) of Examples 1-16, wherein the digital certificate is generated by a cloud service and wirelessly communicated to the processing circuitry (22).

Example 18: A computer-implemented method (200; 300) for authenticating charging of an electric vehicle, EV (10), via electric vehicle supply equipment, EVSE (30), comprising, responsive to a successful communication setup being carried out between the EV (10) and the EVSE (30): causing (210; 320), by processing circuitry (22; 502) of a smart charging cable, SCC (20), authorization of the EV (10) to be charged with power supplied by the EVSE (30) via the SCC (20), the authorization involving a validation of a digital certificate maintained by the processing circuitry (22) using a trusted third actor, TTA (40).

Example 19: A computer program product comprising program code for performing, when executed by the processing circuitry (22), the method (200; 300) of Example 18.

Example 20: A non-transitory computer-readable storage medium comprising instructions, which when executed by the processing circuitry (22), cause the processing circuitry (22) to perform the method (200; 300) of Example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A smart charging cable, SCC (20), for authenticating charging of an electric vehicle, EV (10), via electric vehicle supply equipment, EVSE (30), the SCC (20) comprising processing circuitry (22), wherein, responsive to a successful communication setup being carried out between the EV (10) and the EVSE (30), the processing circuitry (22) is configured to cause authorization of the EV (10) to be charged with power supplied by the EVSE (30) via the SCC (20), the authorization involving a validation of a digital certificate maintained by the processing circuitry (22) using a trusted third actor, TTA (40).

2. The SCC (20) of claim 1, wherein the processing circuitry (22) is configured to cause authorization by:
transmitting an authorization setup request to the EVSE (30);
receiving an authorization setup response from the EVSE (30);
in response to a successful authorization setup indicated by the authorization setup response, transmitting an authorization request to the EVSE (30), the authorization request being configured to be routed by the EVSE (30) to the TTA (40) for performing a sequence authorization process; and
obtaining an authorization response from the EVSE (30) in response to said sequence authorization process resulting in said validation of the digital certificate, wherein a successful authorization response allows the scheduling of a charging session for the EV (10) and the EVSE (30) using the SCC (20).

3. The SCC (20) of claim 2, wherein the sequence authorization process involves a verification that the digital certificate maintained by the SCC (20):
(i) permits a charging session between the EV (10) and the EVSE (30), and
(ii) is not revoked or has expired,
wherein the sequence authorization process involves, by the EVSE (30), a transmission of the digital certificate to the TTA (40) and a reception of a credential validation response from the TTA (40).

4. The SCC (20) of claim 3, wherein the verification that the digital certificate permits a charging session comprises one or more of:
a validation of the digital certificate by a public-key infrastructure, and
an inspection of permissions of the digital certificate based on information obtained from an access control list.

5. The SCC (20) of any of claims 3-4, wherein the verification that the digital certificate is not revoked or has expired comprises one or more of:
querying or downloading a certificate revocation list involving revocation information of digital certificates, and
checking a payload of the digital certificate for an expiry period thereof.

6. The SCC (20) of any preceding claim, wherein the digital certificate is unique to the SCC (20).

7. The SCC (20) of any preceding claim, wherein the processing circuitry (22) is further configured to, subsequent to the validation of a digital certificate, carry out a second authentication procedure adapted to verify the identity of a user operating the SCC (20), the second authentication procedure comprising:
transmitting an authentication request to an external device operable by the user, the processing circuitry (22) being configured to maintain a list of trusted external devices; and
receiving, in response to a successful identity confirmation of the user at the external device, an authentication response from the external device.

8. The SCC (20) of any preceding claim, wherein the SCC (20) is detachable from the EV (10) and the EVSE (30) and portable.

9. The SCC (20) of any preceding claim, wherein the processing circuitry (22) is configured to carry out the communication setup by:
establishing an IP-based connection between the EV (10) and the EVSE (30),
establishing a TLS session between the EV (10) and the EVSE (30), and
establishing supported application protocols between the EV (10) and the EVSE (30).

10. The SCC (20) of any preceding claim, wherein the digital certificate comprises a public provisioning key pair having a private and a public key, the private key being maintained by the processing circuitry (22) of the SCC (20) and the public key being distributed to the EVSE (30) adapted to charge the EV (10).

11. The SCC (20) of any preceding claim, wherein the processing circuitry (22) comprises a secure module for generation of the digital certificate.

12. The SCC (20) of any one of claims 1-10, wherein the digital certificate is generated by a cloud service and wirelessly communicated to the processing circuitry (22).

13. A computer-implemented method (200; 300) for authenticating charging of an electric vehicle, EV (10), via electric vehicle supply equipment, EVSE (30), comprising, responsive to a successful communication setup being carried out between the EV (10) and the EVSE (30):
causing (210; 320), by processing circuitry (22; 502) of a smart charging cable, SCC (20), authorization of the EV (10) to be charged with power supplied by the EVSE (30) via the SCC (20), the authorization involving a validation of a digital certificate maintained by the processing circuitry (22) using a trusted third actor, TTA (40).

14. A computer program product comprising program code for performing, when executed by the processing circuitry (22), the method (200; 300) of claim 13.

15. A non-transitory computer-readable storage medium comprising instructions, which when executed by the processing circuitry (22), cause the processing circuitry (22) to perform the method (200; 300) of claim 13.

## Amended claims

### Amended claims in accordance with Rule 137(2) EPC.

1. A smart charging cable, SCC (20), for authenticating charging of an electric vehicle, EV (10), via electric vehicle supply equipment, EVSE (30), the SCC (20) comprising processing circuitry (22), wherein, responsive to a successful communication setup being carried out between the EV (10) and the EVSE (30), the processing circuitry (22) is configured to cause authorization of the EV (10) to be charged with power supplied by the EVSE (30) via the SCC (20), the authorization involving a validation of a digital certificate maintained by the processing circuitry (22) using a trusted third actor, TTA (40), wherein the processing circuitry (22) is configured to cause authorization by:
transmitting an authorization setup request to the EVSE (30);
receiving an authorization setup response from the EVSE (30);
in response to a successful authorization setup indicated by the authorization setup response, transmitting an authorization request to the EVSE (30), the authorization request being configured to be routed by the EVSE (30) to the TTA (40) for performing a sequence authorization process; and
obtaining an authorization response from the EVSE (30) in response to said sequence authorization process resulting in said validation of the digital certificate, wherein a successful authorization response allows the scheduling of a charging session for the EV (10) and the EVSE (30) using the SCC (20).

2. The SCC (20) of claim 1, wherein the sequence authorization process involves a verification that the digital certificate maintained by the SCC (20):
(i) permits a charging session between the EV (10) and the EVSE (30), and
(ii) is not revoked or has expired,
wherein the sequence authorization process involves, by the EVSE (30), a transmission of the digital certificate to the TTA (40) and a reception of a credential validation response from the TTA (40).

3. The SCC (20) of claim 2, wherein the verification that the digital certificate permits a charging session comprises one or more of:
a validation of the digital certificate by a public-key infrastructure, and
an inspection of permissions of the digital certificate based on information obtained from an access control list.

4. The SCC (20) of any of claims 2-3, wherein the verification that the digital certificate is not revoked or has expired comprises one or more of:
querying or downloading a certificate revocation list involving revocation information of digital certificates, and
checking a payload of the digital certificate for an expiry period thereof.

5. The SCC (20) of any preceding claim, wherein the digital certificate is unique to the SCC (20).

6. The SCC (20) of any preceding claim, wherein the processing circuitry (22) is further configured to, subsequent to the validation of a digital certificate, carry out a second authentication procedure adapted to verify the identity of a user operating the SCC (20), the second authentication procedure comprising:
transmitting an authentication request to an external device operable by the user, the processing circuitry (22) being configured to maintain a list of trusted external devices; and
receiving, in response to a successful identity confirmation of the user at the external device, an authentication response from the external device.

7. The SCC (20) of any preceding claim, wherein the SCC (20) is detachable from the EV (10) and the EVSE (30) and portable.

8. The SCC (20) of any preceding claim, wherein the processing circuitry (22) is configured to carry out the communication setup by:
establishing an IP-based connection between the EV (10) and the EVSE (30),
establishing a TLS session between the EV (10) and the EVSE (30), and
establishing supported application protocols between the EV (10) and the EVSE (30).

9. The SCC (20) of any preceding claim, wherein the digital certificate comprises a public provisioning key pair having a private and a public key, the private key being maintained by the processing circuitry (22) of the SCC (20) and the public key being distributed to the EVSE (30) adapted to charge the EV (10).

10. The SCC (20) of any preceding claim, wherein the processing circuitry (22) comprises a secure module for generation of the digital certificate.

11. The SCC (20) of any one of claims 1-9, wherein the digital certificate is generated by a cloud service and wirelessly communicated to the processing circuitry (22).

12. A computer-implemented method (200; 300) for authenticating charging of an electric vehicle, EV (10), via electric vehicle supply equipment, EVSE (30), comprising, responsive to a successful communication setup being carried out between the EV (10) and the EVSE (30):
causing (210; 320), by processing circuitry (22; 502) of a smart charging cable, SCC (20), authorization of the EV (10) to be charged with power supplied by the EVSE (30) via the SCC (20), the authorization involving a validation of a digital certificate maintained by the processing circuitry (22) using a trusted third actor, TTA (40),
wherein causing (210; 320) the authorization comprises:
transmitting an authorization setup request to the EVSE (30);
receiving an authorization setup response from the EVSE (30);
in response to a successful authorization setup indicated by the authorization setup response, transmitting an authorization request to the EVSE (30), the authorization request being configured to be routed by the EVSE (30) to the TTA (40) for performing a sequence authorization process; and
obtaining an authorization response from the EVSE (30) in response to said sequence authorization process resulting in said validation of the digital certificate, wherein a successful authorization response allows the scheduling of a charging session for the EV (10) and the EVSE (30) using the SCC (20).

13. A computer program product comprising program code for performing, when executed by the processing circuitry (22), the method (200; 300) of claim 12.

14. A non-transitory computer-readable storage medium comprising instructions, which when executed by the processing circuitry (22), cause the processing circuitry (22) to perform the method (200; 300) of claim 12.
